# EUROPEAN PATENT APPLICATION

(11) **EP 4 407 947 A1**
(43) Date of publication of application: **31.07.2024**
(21) Application number: 21961696.8
(22) Date of filing: 26.10.2021
(51) Int. Cl.: H04L 45/24

(54) **DATA CENTER NETWORK AND DATA TRANSMISSION METHOD**

(71) Applicant: Huawei Technologies Co., Ltd., Shenzhen, Guangdong 518129 (CN)
(72) Inventor: LAM, Wan, Shenzhen, Guangdong 518129 (CN)
(74) Representative: Körber, Martin Hans
(86) International application number: PCT/CN2021/126439
(87) International publication number: WO 2023/070320

(57) **Abstract**

Embodiments of this application provide a data center network. The data center network includes: a first group, used for accessing a first server, where the first group includes a first node; a second group, used for accessing a second server, where the second group includes a plurality of second nodes; and a third node disposed outside the first group and the second group, where the third node does not access a server. The first node sends, based on first data traffic sent by the first server, data to at least one of the plurality of second nodes over at least one of a first link and a second link when a destination address indicated in the first data traffic is the second server. The first link is a directly connected link between the first group and the second group, and the second link is a link that is between the first group and the second group and that is transited via the third node. In the data center network provided in embodiments of this application, data exchange between more servers can be implemented by using a small quantity of data nodes.

## Description

### TECHNICAL FIELD

Embodiments of this application relate to the field of network communication technologies, and in particular, to a data center network and a data transmission method.

### BACKGROUND

In recent years, with development of technologies such as Internet services and distributed computing, a data center network (dater center network, DCN) technology has been widely applied. A data center network usually uses a multi-layer networking mode such as fat-tree, to provide a full-mesh network for a plurality of servers in a data center to implement data exchange between different servers.

Currently, in the multi-layer networking mode, when the data center needs to be connected to more servers, to be specific, a scale of the data center network is larger, more layers of switching nodes need to be disposed in the data center network. In other words, more switching nodes need to be disposed between every two servers for data transmission. Consequently, more switching nodes need to be disposed in the data center network, and a quantity of nodes in the data center network is increased. As a result, costs of the data center network are increased. In addition, more switching nodes used indicate a higher delay of data transmission between the servers. As a result, working efficiency of the data center deteriorates. Therefore, in the large-scale data center network, how to reduce the costs of the data center network and improve a rate of data transmission between the servers becomes a problem that needs to be resolved.

### SUMMARY

According to a data center network and a data transmission method provided in this application, data exchange between more servers can be implemented by using a small quantity of nodes.

To achieve the foregoing objective, this application uses the following technical solutions.

According to a first aspect, an embodiment of this application provides a data center network. The data center network includes: a first group, used for accessing a first server, where the first group includes a first node; a second group, used for accessing a second server, where the second group includes a plurality of second nodes; and a third node disposed outside the first group and the second group. The first node sends, based on a first data packet sent by the first server, data to at least one of the plurality of second nodes over at least one of a first link and a second link when a destination address indicated in the first data packet is the second server. The first link is a directly connected link between the first group and the second group, and the second link is a link that is between the first group and the second group and that is transited via the third node.

In this embodiment of this application, the first node may be an access node or an aggregation node, and the second node may also be an access node or an aggregation node. The third node may be a core node. First data traffic in this embodiment of this application may include a plurality of data packets.

When the first node is a first access node and the second node is a second aggregation node, the first link may be a link from the first access node, to an aggregation node in the first group, and to the second node. The second link may be a link from the first node, to an aggregation node in the first group, to the core node, and to the second node.

When the first node is the first access node and the second node is a second access node, the first link may be a link from the first node, to an aggregation node in the first group, to an aggregation node in the second group, and to the second node. The second link may be a link from the first node, to an aggregation node in the first group, to the core node, to an aggregation node in the second group, and to the second node.

When the first node is a first aggregation node and the second node is the second aggregation node, the first link may be a link from the first node to the second node. The second link may be a link from the first node, to the core node, and to the second node.

When the first node is the first aggregation node and the second node is the second access node, the first link may be a link from the first node, to an aggregation node in the second group, and to the second node. The second link may be a link from the first node, to the core node, to an aggregation node in the second group, and to the second node.

In the data center network provided in this embodiment of this application, when data exchange is performed between servers accessed by different groups, a first node connected (including a direct connection or an indirect connection by using another node) to a source server may select at least one of a directly connected link and a link for data forwarding by using the third node, to transmit data to a second node connected (including a direct connection or an indirect connection by using another node) to a destination server. Therefore, in the data center network provided in this embodiment of this application, data exchange between more servers can be implemented by using a small quantity of nodes, so that costs of the data center network can be reduced. In addition, a small quantity of nodes may be disposed on a data transmission link between servers, so that a data transmission delay can be reduced, to improve data transmission efficiency of the data center network.

According to the first aspect, in a possible implementation, the first node is specifically configured to: when a congestion degree of the first link is lower than a congestion degree of the second link, send the first data traffic to a fourth node in the plurality of second nodes over the first link; when a congestion degree of the first link is higher than a congestion degree of the second link, send the first data traffic to a fourth node in the plurality of second nodes over the second link; or when a congestion degree of the first link and a congestion degree of the second link both are greater than a first preset threshold, divide the first data traffic into second data traffic and third data traffic, transmit the second data traffic to a fourth node over the first link, and transmit the third data traffic to a fifth node in the second nodes over the second link; The congestion degree of the first link is determined based on a bandwidth of the first link and data traffic on the first link in a preset time period.

According to the first aspect, in a possible implementation, the data center network further includes a third group, used for accessing a third server. The third group includes a sixth node. The first node is further configured to: when the congestion degree of the first link is greater than or equal to the first preset threshold and the congestion degree of the second link is greater than or equal to a second preset threshold, divide the first data traffic into fourth data traffic, fifth data traffic, and sixth data traffic, transmit the fourth data traffic to the fourth node in the plurality of second nodes over the first link, transmit the fifth data traffic to the fifth node in the plurality of second nodes over the second link, and transmit the sixth data traffic to the sixth node over a third link. The third link is a link that is between the first group and the second group and that is transited via the sixth node. The congestion degree of the second link is determined based on a bandwidth of the second link and data traffic on the second link in a preset time period.

According to the first aspect, in a possible implementation, the first group includes a plurality of first nodes, and the data center network includes a plurality of third nodes. The plurality of first nodes are correspondingly connected to the plurality of third nodes over a plurality of links. The plurality of second nodes are correspondingly connected to the plurality of third nodes over a plurality of links.

According to the first aspect, in a possible implementation, the plurality of third nodes form a plurality of groups, and third nodes in each group are connected to each other over a plurality of links.

According to the first aspect, in a possible implementation, the first group further includes a seventh node. The seventh node is configured to access a server, and the seventh node performs uplink communication with the plurality of first nodes over a plurality of uplinks. The seventh node is configured to: receive the first data traffic from the first server, select, based on at least one of a plurality of links from the seventh node to the second server, a quantity of nodes disposed on each of the plurality of links, and a congestion degree of each link, a link from the plurality of links when the destination address indicated in the first data traffic is the second server, and send the first data traffic to the first node over the selected link.

According to a second aspect, an embodiment of this application provides a data transmission method applied to a data center network. The data center network includes a first group, a second group, and a third node disposed outside the first group and the second group. The first group is used for accessing a first server. The first group includes a first node. The second group is used for accessing a second server. The second group includes a plurality of second nodes. The method includes: sending, by the first node based on first data traffic sent by the first server, data to at least one of the plurality of second nodes over at least one of a first link and a second link when a destination address indicated in the first data traffic is the second server. The first link is a directly connected link between the first group and the second group, and the second link is a link that is between the first group and the second group and that is transited via the third node.

According to the second aspect, in a possible implementation, the sending, by the first node, data to the second node over at least one of a first link and a second link includes: when a congestion degree of the first link is lower than a congestion degree of the second link, sending the first data traffic to a fourth node in the plurality of second nodes over the first link; when a congestion degree of the first link is higher than a congestion degree of the second link, sending the first data traffic to a fourth node in the plurality of second nodes over the second link; or when a congestion degree of the first link and a congestion degree of the second link both are greater than a first preset threshold, dividing the first data traffic into second data traffic and third data traffic, transmitting the second data traffic to a fourth node over the first link, and transmitting the third data traffic to a fifth node in the second nodes over the second link. The congestion degree of the first link is determined based on a bandwidth of the first link and data traffic on the first link in a preset time period.

According to the second aspect, in a possible implementation, the data center network further includes a third group, used for accessing a third server. The third group includes a sixth node. The sending, by the first node, data to the plurality of second nodes over at least one of a first link and a second link includes: when the congestion degree of the first link is greater than or equal to the first preset threshold and the congestion degree of the second link is greater than or equal to a second preset threshold, dividing the first data traffic into fourth data traffic, fifth data traffic, and sixth data traffic, transmitting the fourth data traffic to the fourth node in the plurality of second nodes over the first link, transmitting the fifth data traffic to the fifth node in the plurality of second nodes over the second link, and transmitting the sixth data traffic to the sixth node over a third link. The third link is a link that is between the first group and the second group and that is transited via the sixth node. The congestion degree of the second link is determined based on a bandwidth of the second link and data traffic on the second link in a preset time period.

According to the second aspect, in a possible implementation, the first group further includes a seventh node. The seventh node is configured to access a server, and the seventh node performs uplink communication with the plurality of first nodes over a plurality of uplinks. The method further includes: receiving the first data traffic from the first server, selecting, based on at least one of a plurality of links from the seventh node to the second server, a quantity of nodes disposed on each of the plurality of links, and a congestion degree of each link, a link from the plurality of links when the destination address indicated in the first data traffic is the second server, and sending the first data traffic to the first node over the selected link.

According to a third aspect, an embodiment of this application provides a node. The node is configured to implement a function of any node in the data transmission method provided in any one of the second aspect or the possible implementations of the second aspect. The function may be implemented by hardware, or may be implemented by the hardware by executing corresponding software. The hardware or the software includes one or more units corresponding to the foregoing function.

In a possible implementation, a structure of the node includes a processor and a communication interface. The processor is configured to support a management node in performing the steps of any node in the method according to any one of the first aspect or the possible implementations of the first aspect. The communication interface is configured to support communication between the node and another network element. The node may further include a memory. The memory is configured to be coupled to the processor and stores program code and data that are necessary for a device.

According to a fourth aspect, an embodiment of this application provides a computer-readable storage medium. The computer-readable storage medium stores instructions; and when the instructions are run on a computer, the computer is enabled to perform the steps of any node in the data transmission method according to the foregoing aspects.

According to a fifth aspect, an embodiment of this application provides a computer program product including instructions; and when the computer program product runs on a computer, the computer is enabled to perform the steps of any node in the data transmission method according to the foregoing aspects.

It may be understood that any one of the data transmission method, the device, the computer storage medium, or the computer program product provided above is configured to perform a corresponding method provided above. Therefore, for beneficial effects that may be achieved, refer to the beneficial effects of a corresponding data center network provided above. Details are not described herein again.

### BRIEF DESCRIPTION OF DRAWINGS

To describe the technical solutions in embodiments of this application more clearly, the following briefly describes the accompanying drawings that are used for describing embodiments of this application. It is clear that the accompanying drawings in the following descriptions show merely some embodiments of this application, and a person of ordinary skill in the art may still derive other drawings from these accompanying drawings without creative efforts.
FIG. 1A to FIG. 1C each are a schematic diagram of a structure of a data center network in a conventional technology according to an embodiment of this application;
FIG. 2A is a schematic diagram of a structure of a data center network according to an embodiment of this application;
FIG. 2B is a schematic diagram of another structure of a data center network according to an embodiment of this application;
FIG. 3 is a schematic diagram of a hardware structure of each node in a data center network according to an embodiment of this application;
FIG. 4 is a flowchart of data transmission between nodes in a data center network according to an embodiment of this application;
FIG. 5 is a diagram of data links from an access node a11 to a server s21 in the data center network shown in FIG. 2A according to an embodiment of this application;
FIG. 6 is a schematic diagram of still another structure of a data center network according to an embodiment of this application;
FIG. 7 is a schematic diagram of still another structure of a data center network according to an embodiment of this application;
FIG. 8 is a schematic diagram of still another structure of a data center network according to an embodiment of this application;
FIG. 9 is a flowchart of a data transmission method applied to a data center network according to an embodiment of this application; and
FIG. 10 is a schematic diagram of a software structure of a node in a data center network according to an embodiment of this application.

### DESCRIPTION OF EMBODIMENTS

With reference to accompanying drawings in embodiments of this application, the following clearly and completely describes the technical solutions in embodiments of this application. It is clear that the described embodiments are a part but not all of embodiments of this application. All other embodiments obtained by a person of ordinary skill in the art based on embodiments of this application without creative efforts shall fall within the protection scope of this application.

The words "first", "second", and the like mentioned in this specification do not indicate any order, quantity, or importance, but are merely used for distinguishing between different components. Likewise, the word "one", "a/an", or the like does not indicate a quantity limitation either, but is intended to indicate that at least one exists. The word "connection", or the like is not limited to a physical or mechanical connection, but may include an electrical connection, whether directly or indirectly. This is equivalent to a connectivity in a broad sense.

In embodiments of this application, the words such as "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner. In the descriptions of embodiments of this application, unless otherwise stated, "a plurality of" means two or more than two. For example, a plurality of nodes refer to two or more nodes.

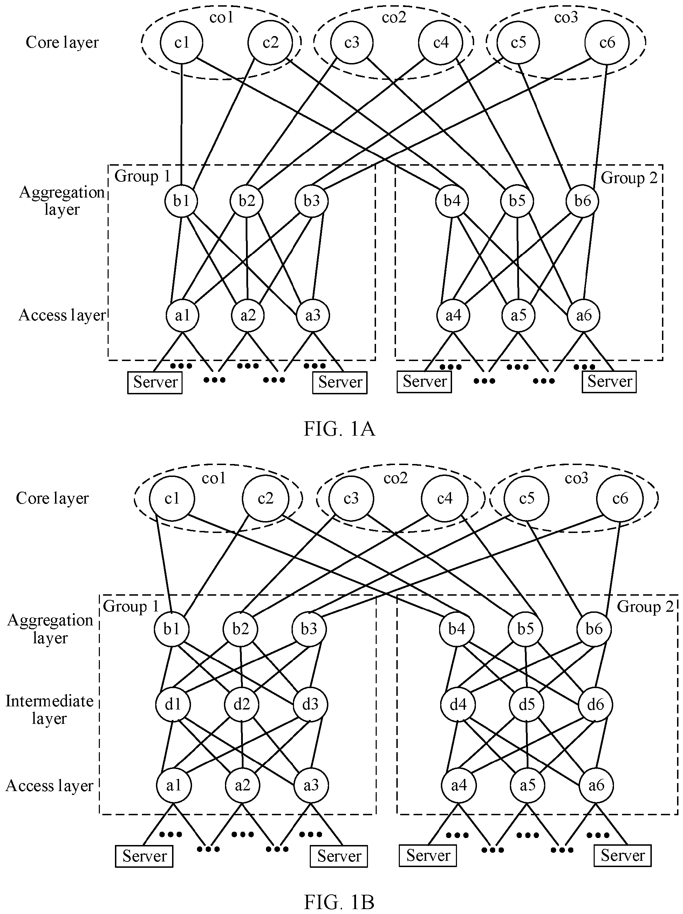

FIG. 1A is a schematic diagram of a structure of a data center network in a conventional technology. As shown in FIG. 1A, a conventional data center network includes an access layer, an aggregation layer, and a core layer. The access layer includes a plurality of access (Access) nodes (which are also referred to as access switches or access devices). The aggregation layer includes a plurality of aggregation (Aggregation) nodes (which are also referred to as aggregation routers or aggregation devices). The core layer includes a plurality of core (Core) nodes (which are also referred to as core routers or core devices). A downlink port of the access node is connected to a server that needs to perform data traffic exchange, an uplink port is connected to a downlink port of the aggregation node, and an uplink port of the aggregation node is connected to the core node. In FIG. 1A, the plurality of aggregation nodes at the aggregation layer and the plurality of access nodes at the access layer are divided into a plurality of groups (Groups). A group may also be referred to as a pod. A same group includes a plurality of access nodes and a plurality of aggregation nodes. The plurality of access nodes and the plurality of aggregation nodes are fully connected. A plurality of core nodes connected to a same aggregation node may be referred to as a core (Core) plane. Each core plane is connected to different aggregation nodes in each group. For example, FIG. 1A shows that the data center network includes two groups (Group 1 and Group 2), and one group includes three access nodes (where Group 1 includes access nodes a1 to a3, and Group 2 includes access nodes a4 to a6) and three aggregation nodes (where Group 1 includes aggregation nodes b1 to b3, and Group 2 includes aggregation nodes b4 to b6). FIG. 1A shows three core planes (co1 to co3), and each core plane includes two core nodes (where co1 includes core nodes c1 and c2, co2 includes core nodes c3 and c4, and co3 includes core nodes c5 and c6).

In the data center network shown in FIG. 1A, when data exchange is performed between servers connected to different access nodes in a same group, the data exchange may be implemented by using aggregation nodes located in the same group as the access nodes. For example, if a server connected to the access node a1 and a server connected to the access node a3 need to perform data exchange, the access node a1 may send data of the server connected to the access node a1 to the access node a3 by using the aggregation node b1. When data exchange is performed between servers connected to access nodes in different groups, the data exchange may be implemented by using aggregation nodes in a same group as the access nodes and core nodes connected to the aggregation nodes. For example, if the server connected to the access node a1 and a server connected to the access node a5 need to perform data exchange, the access node a1 may send data of the server connected to the access node a1 to the aggregation node b1, the aggregation node b1 forwards the data to the core node c1, and the core node c1 sends the data to the access node a5 by using the aggregation node b4.

In the structure of the data center network shown in FIG. 1A, a quantity of ports of each node is fixed, and a quantity of accessed servers is limited by the quantity of ports of each node. However, as a data throughput of a data center increases, the data center network needs more servers accessed. When the data center network shown in FIG. 1A needs more servers accessed, to implement data exchange between the more servers, the data center network usually needs to additionally add one or more layers of nodes to each group. For example, a layer of nodes are additionally added between the access nodes and the aggregation nodes. For example, FIG. 1B shows a layer of nodes d1 to d6 that are additionally added. Therefore, in the conventional technology, when the data center network needs more servers accessed, more layers of nodes need to be disposed, and a quantity of devices in the data center network is increased. As a result, costs of the data center network are increased. In addition, in a structure of a data center network shown in FIG. 1B, data exchange between servers needs to be performed by using more nodes. For example, in FIG. 1B, when the server connected to the access node a1 and the server connected to the access node a5 need to perform data exchange, data transition between the two servers further needs to be performed by using seven nodes, namely, the access node a1, the node d1, the aggregation node b1, the core node c1, the aggregation node b4, the node d5, and the access node a5. This causes a large delay of data, and reduces a data transmission rate of the data center network.

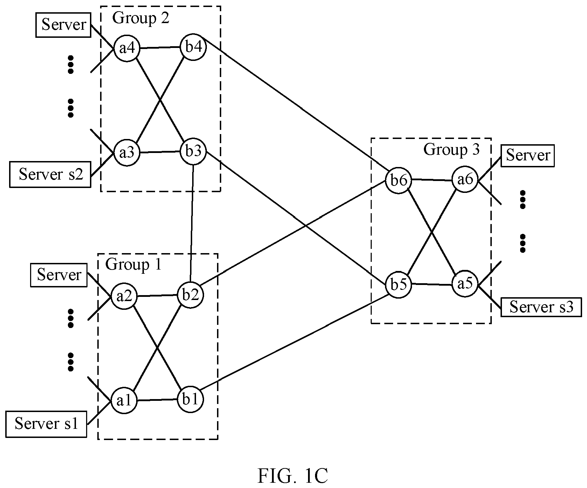

To make up for disadvantages of the conventional technology shown in FIG. 1A and FIG. 1B, the industry further provides a structure of a data center network shown in FIG. 1C. In the data center network shown in FIG. 1C, no central node is disposed, and groups are directly connected to each other by using aggregation nodes. In the data center network shown in FIG. 1C, when a server s1 that accesses Group 1 needs to transmit data to a server s2 that accesses Group 2, the data may be transmitted over a directly connected link between Group 1 and Group 2 (over the directly connected link between the aggregation node b2 and the aggregation node b3). When a traffic load of the directly connected link is excessively high, the server s1 performs data transmission over a link for data forwarding by using a node b5 in Group 3 shown in FIG. 1C. In this case, if a server s3 in Group 3 also uses the node b5 to transmit data to the server s2 in Group 2, a conflict occurs between traffic transmitted from a node b 1 to the node b5 and traffic transmitted from a node a5 to the node b5. In other words, a bandwidth preemption problem exists. When there are more groups in the data center network shown in FIG. 1C and an amount of data transmitted between nodes is larger, the bandwidth preemption problem is more severe.

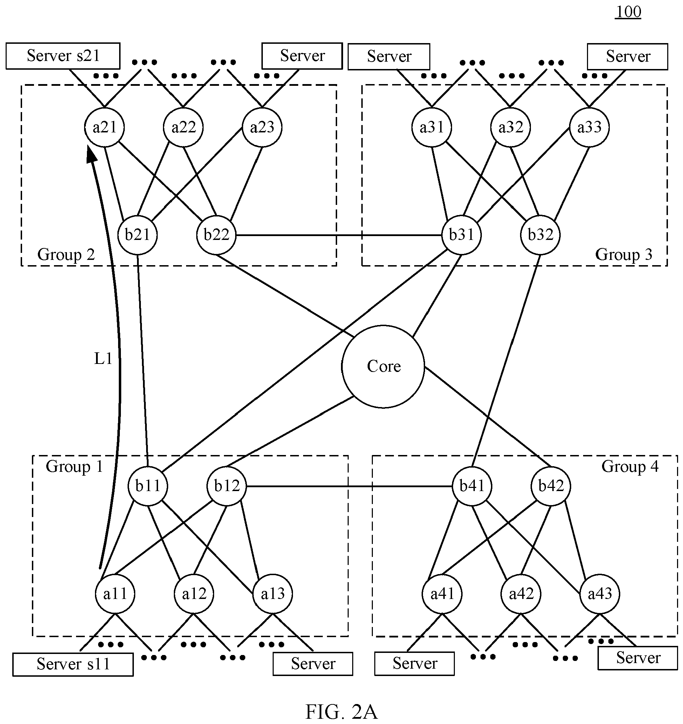

A data center network provided in embodiments of this application includes a plurality of groups and core nodes. At least one aggregation node in each group is connected to a core node over a link. In addition, the at least one aggregation node in each group is further connected to at least one aggregation node in another group over a directly connected link. When data exchange is performed between servers connected to access nodes in different groups, an aggregation node connected to a source server may select at least one of a directly connected link and a link for data forwarding by using the core node, to transmit data to an aggregation node connected to a destination server. Therefore, in the data center network provided in embodiments of this application, one core node is disposed to provide at least two links between servers. However, in the conventional technology shown in FIG. 1A and FIG. 1B, because all data needs to be forwarded by using the core node, at least two core nodes need to be disposed to provide two links between the servers. In comparison with the conventional data center network shown in FIG. 1A and FIG. 1B, in the data center network provided in embodiments of this application, a larger-scale network can be established by using a small quantity of data nodes, so that data exchange between more servers is implemented, thereby reducing costs of the data center network. In addition, a small quantity of nodes may be disposed on a data transmission link between servers, so that a data transmission delay can be reduced, to improve data transmission efficiency of the data center network. Moreover, in comparison with the data center network shown in FIG. 1C, because the core node shown in embodiments of this application does not access a server, the bandwidth preemption problem shown in FIG. 1C can be alleviated. The following describes in detail, by using the embodiments shown in FIG. 2A to FIG. 8, a data center network and a data transmission method applied to the data center network that are provided in embodiments of this application.

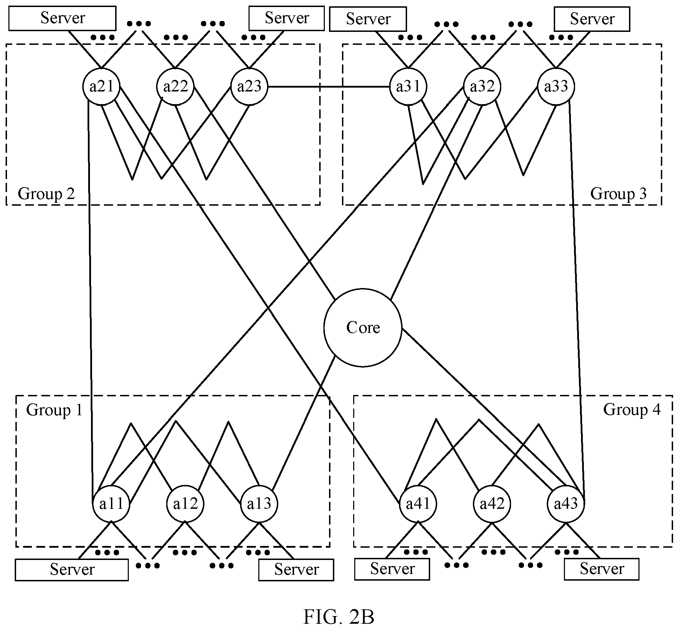

FIG. 2A is a schematic diagram of a structure of a data center network according to an embodiment of this application. A data center network 100 includes a plurality of groups and at least one core node. For example, FIG. 2A shows four groups: Group 1 to Group 4, and one core node. Each group may include a plurality of access nodes and a plurality of aggregation nodes, and the plurality of access nodes and the plurality of aggregation nodes are fully connected. For example, FIG. 2A shows that each group includes three access nodes (where Group 1 includes access nodes a11 to a13, Group 2 includes access nodes a21 to a23, Group 3 includes access nodes a31 to a33, and Group 4 includes access nodes a41 to a43) and two aggregation nodes (where Group 1 includes aggregation nodes b11 to b12, Group 2 includes aggregation nodes b21 to b22, Group 3 includes aggregation nodes b31 to b32, and Group 4 includes aggregation nodes b41 to b42). In FIG. 2A, a downlink port of an access node is connected to a server that needs to perform data exchange, and an uplink port is connected to a downlink port of an aggregation node. At least one aggregation node in each group is connected to the core node core. For example, FIG. 2A shows that the aggregation node b12, the aggregation node b22, the aggregation node b31, and the aggregation node b42 are all connected to the core node core. In addition, an aggregation node in each group is connected to an aggregation node in another group. For example, FIG. 2A shows that the aggregation node b11 is connected to the aggregation node b21 and the aggregation node b31, the aggregation node b 12 is connected to the aggregation node b41, the aggregation node b22 is connected to the aggregation node b31, and the aggregation node b32 is connected to the aggregation node b41. It should be noted that, in this embodiment of this application, some aggregation nodes (for example, the aggregation node b42) may be connected only to the core node, some aggregation nodes (for example, the aggregation node b11, the aggregation node b21, the aggregation node b32, and the aggregation node b41) may be connected only to an aggregation node in another group, and some aggregation nodes (for example, the aggregation node b12, the aggregation node b22, and the aggregation node b31) may be connected to both the core node and an aggregation node in another group. A connection relationship between an aggregation node and another node is not specifically limited in this embodiment of this application, and is determined based on factors such as an application scenario requirement, a quantity of aggregation nodes, a quantity of ports included in each aggregation node, a quantity of core nodes, and a quantity of ports included in the core node. In addition, in another possible scenario, no aggregation node may be disposed in each group in the data center network. As shown in FIG. 2B, access nodes in a group are directly connected to each other, an access node in a group and an access node in another group are directly connected to each other, and an access node and a core node are directly connected to each other. Connection relationships between the access nodes and between the access nodes and the core node are shown in FIG. 2B, and details are not described again.

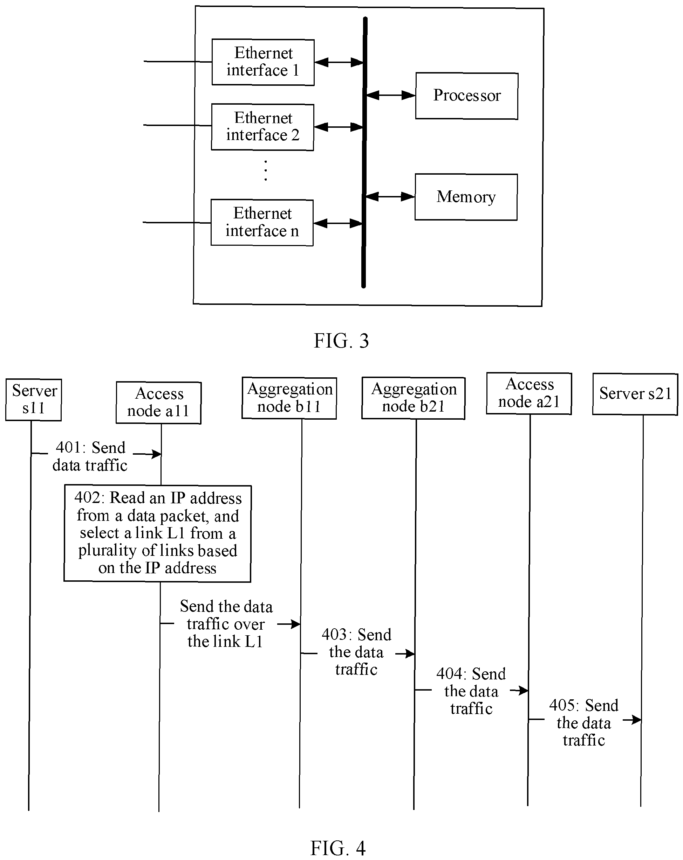

In the data center network 100 provided in this embodiment of this application, a structure of each node may be shown in FIG. 3. FIG. 3 is a schematic diagram of a structure of a node according to an embodiment of this application. The node may be a core node, an aggregation node, or an access node. In actual application, the core node, the aggregation node, and the access node in the data center network 100 may be switches, routers, other network devices, or the like. In this embodiment of this application, the switch is used as an example to describe the structure of the node. With reference to FIG. 3, the node includes a processor, a memory, and a plurality of Ethernet interfaces. The processor performs various functions of the node by running or executing a software program stored in the memory and invoking instructions and data that are stored in the memory. The processor may include one or more modules, for example, include a central processing unit (central processing unit, CPU) and a network processor (network processor, NP). The network processor may be implemented by using an application-specific integrated circuit (application-specific integrated circuit, ASIC) or a field programmable gate array (field Programmable Gate array, FPGA) chip. The memory may be configured to store the software program, the instructions, and the data, and may be implemented by any type of volatile or nonvolatile memory or a combination thereof, for example, including one or more of a static random access memory (SRAM), a dynamic random access memory (SDRAM), a double rate synchronous dynamic random access memory (DDR), an erasable programmable read-only memory (EPROM), and a read-only memory (ROM). An Ethernet interface is a port of the node, and one node may include a plurality of Ethernet interfaces. For example, n Ethernet interfaces are shown in the figure. In the plurality of Ethernet interfaces, some Ethernet interfaces are configured as input ports of the node, to receive data from a server or another node, and others are configured as output ports of the node, to send data to another node or server. It should be noted that, a quantity of Ethernet interfaces included in each node is not specifically limited in this embodiment of this application, and the quantity of Ethernet interfaces included in each node is set based on a scenario requirement.

Still refer to FIG. 2A. In the data center network 100 shown in FIG. 2A, when data exchange is performed between servers connected to different access nodes in a same group, the data exchange may be implemented by using a fully connected link used for connecting an access node and an aggregation node in the group. When data exchange is performed between servers connected to access nodes in different groups, the data exchange may be implemented by using fully connected links in the groups and links directly connected by using aggregation nodes between the groups, or may be implemented by using the fully connected links in the groups and links that are between the groups and that are transited via the core node core. In a specific implementation, each node in the data center network 100 may maintain a routing table (Routing Table). The routing table records an address of each server, a link (namely, a link from the node to each destination server) corresponding to the address of each server, a quantity of nodes disposed on each link, and a bandwidth of each link. The address of each server may include but not limited to: an IP address, a MAC address, or a port number. After receiving data, each node queries the routing table for a corresponding link based on a destination server indicated in the data, to forward the data. As shown in FIG. 2A, the following uses an example in which a server s11 transmits data to a server s21. With reference to a data transmission procedure shown in FIG. 4, the data transmission method in the data center network 100 shown in FIG. 2A is described. As shown in FIG. 2A, the server s11 is connected to the node a11 in Group 1, and the server s21 is connected to the node a21 in Group 2. An example in which the address of each server is the IP address is used. The data transmission method shown in FIG. 4 specifically includes the following steps.

Step 401: The server s11 sends data traffic to the access node a11. In a specific implementation, the server s11 may encapsulate to-be-sent data into a plurality of data packets based on a preset frame format. Each data packet includes a header field and a content field. The header field is used for carrying an IP address of the server s21, and the content field is used for carrying content of the to-be-sent data. Generally, the server s11 cannot complete transmission of the to-be-sent data by using one data packet. Therefore, the server s11 usually encapsulates to-be-transmitted data into a plurality of data packets for transmission. The data traffic may be the plurality of data packets transmitted by the server s11 to the access node a11.

Step 402: The access node a11 reads an IP address from a data packet, selects a link L1 from a plurality of links based on the IP address, and sends the data traffic to the aggregation node b11 over the link L1.

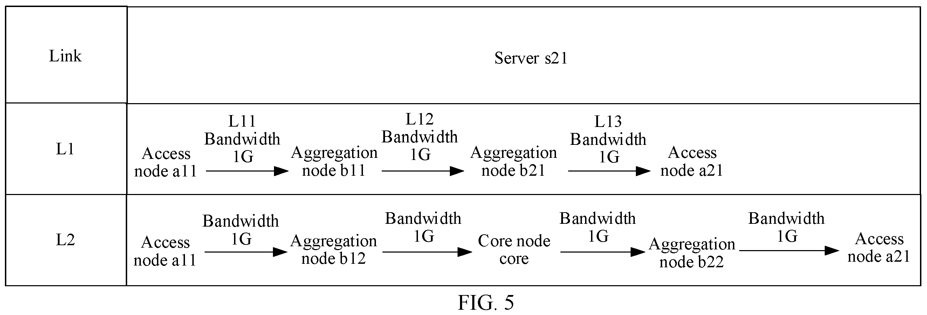

In a specific implementation, the access node a11 may read the IP address recorded in the header field of each data packet, where the IP address is the IP address of the server s21. Then, the access node a11 queries the maintained routing table for a link that is from the access node a11 to a server s21 and that corresponds to the IP address, the quantity of nodes disposed on each link, and the bandwidth of each link based on the IP address. For example, the routing table maintained by the access node a11 is shown in FIG. 5. FIG. 5 shows links from the access node a11 to the server s21. It may be understood that the routing table shown in FIG. 5 may further record links from the access node a11 to another server (for example, a server s31 that accesses Group 3 or a server s42 that accesses Group 4). This is not shown in FIG. 5. It can be learned from FIG. 2A and FIG. 5 that there are two links for transmitting the data traffic from the access node a11 to the server s21: the link L1 and a link L2. The aggregation node b11, the aggregation node b21, and the access node a21 are disposed on the link L1. The aggregation node b12, the core node core, the aggregation node b22, and the access node a21 are disposed on the link L2. When the link L1 is used for transmitting the data traffic, the access node a11 transmits the data traffic to the server s21 through four hops. When the link L2 is used for transmitting the data traffic, the access node a11 transmits the data traffic to the server s21 through five hops. Transmitting a data packet over the link L1 has a higher data transmission rate and a lower delay. The access node a11 may preferentially use the link L1 to transmit the data traffic. In addition, the routing table shown in FIG. 5 further records a bandwidth between every two nodes on each transmission link. The access node a11 may determine a congestion degree of each link based on the bandwidth of each link. Then, the access node a11 may compare a congestion degree of the link L1 and a congestion degree of the link L2, and preferentially select a link with a lowest congestion degree to transmit the data traffic. When a difference between the congestion degree of the link L1 and the congestion degree of the link L2 is within a preset range, the link L1 is preferentially selected to transmit the data traffic. Further, when the congestion degree of the link L1 and the congestion degree of the link L2 both are high, the access node a11 may choose to distribute the data traffic to the two links for separate transmission. In this embodiment of this application, the access node a11 may directly or indirectly determine the congestion degree of the link L1 and the congestion degree of the link L2 in various manners. The following describes an example in which the access node a11 obtains the congestion degree of the link L1. It can be learned from FIG. 2 and FIG. 5 that the link L1 includes a link L11 from the access node a11 to the aggregation node b 11, a link L12 from the aggregation node b11 to the aggregation node b21, and a link L13 from the aggregation node b21 to the access node a21. The access node a11 may determine a congestion degree of the link L11 based on a bandwidth of the link L11 and a total amount of data that currently needs to be transmitted over the link L11. In addition, the node a11 may alternatively determine the congestion degree of the link L11 based on average utilization of the bandwidth on the link L11 (where the average utilization of the bandwidth on the link L11 in a preset time period is a ratio of data traffic on the link L11 to the bandwidth on the link L11 in the preset time period). In addition, the access node a11 may receive, from the aggregation node b11, indication information indicating a congestion degree of the link L12, and receive, from the aggregation node b12, indication information indicating a congestion degree of the link L13. It is assumed that the access node a11 determines that the congestion degree of the link L1 is lower than the congestion degree of the link L2, the access node a11 sends the data traffic to the aggregation node b11.

Step 403: The aggregation node b11 sends the data traffic to the aggregation node b21.

Step 404: The aggregation node b21 sends the data traffic to the access node a21.

Step 405: The access node a21 sends the data traffic to the server s21.

It should be noted that, if average utilization of the bandwidth on the link that connects the access node a11 and the aggregation node b11 is greater than or equal to a preset threshold, in step 402, the plurality of data packets in the data traffic are divided into two parts, where a first part of the data packets is sent to the aggregation node b11, and a second part of the data packets is sent to the aggregation node b12. Therefore, in step 403 to step 405, the aggregation node b11 sends the first part of the data packets to the aggregation node b21. The aggregation node b21 sends the first part of the data packets to the access node a21. The access node a21 sends the first part of the data packets to the server s21. In addition, the method further includes the following step 406 to step 410. Step 406: The access node b 11 sends the second part of the data packets to the aggregation node b12. Step 407: The aggregation node b12 sends the second part of the data packets to the core node core. Step 408: The core node core sends the second part of the data packets to the aggregation node b22. Step 409: The aggregation node b22 sends the second part of the data packets to the access node a21. Step 410: The access node a21 sends the second part of the data packets to the server s21.

It can be learned from the data center network 100 shown in FIG. 2A that, in the data center network 100 provided in this embodiment of this application, one core node is disposed to provide at least two links between servers. However, in the conventional technology shown in FIG. 1A, because all data needs to be forwarded by using the core node, at least two core nodes need to be disposed to provide two links between the servers. Therefore, in comparison with the conventional technology shown in FIG. 1A in which all the data needs to be forwarded by using the core node, in the data center network 100 provided in this embodiment of this application, a small quantity of core nodes are disposed to provide a plurality of links for data transmission between the servers, so that costs of the data center network can be reduced. In addition, when the data exchange is performed between the servers connected to the access nodes in the different groups, and an amount of data exchanged is small (for example, less than a bandwidth of a directly connected link between aggregation nodes), data transmission may be performed over the directly connected link between the aggregation nodes. In comparison with a case in which the data center network shown in FIG. 1A requires five nodes to perform data transition, in this embodiment of this application, four nodes are used to perform data transition, so that the data exchange between the servers connected to the access nodes in the different groups can be implemented, thereby reducing a data transmission delay.

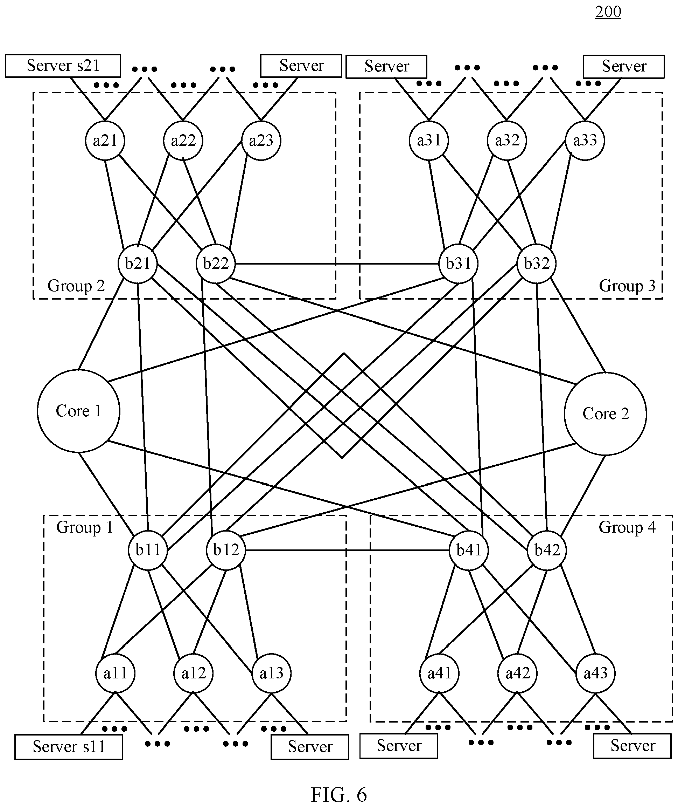

For example, in the data center network 100 shown in FIG. 2A, the data center network 100 includes one core node. In a possible implementation of this embodiment of this application, the data center network may further include a plurality of core nodes, and a quantity of core nodes may be the same as a quantity of aggregation nodes included in a group. In this case, aggregation nodes in each group are correspondingly connected to core nodes. FIG. 6 is a schematic diagram of a structure of a data center network 200 according to an embodiment of this application. For example, FIG. 6 shows four groups: Group 1 to Group 4. Each group includes three access nodes (where Group 1 includes access nodes a11 to a13, Group 2 includes access nodes a21 to a23, Group 3 includes access nodes a31 to a33, and Group 4 includes access nodes a41 to a43) and two aggregation nodes (where Group 1 includes aggregation nodes b11 and b12, Group 2 includes aggregation nodes b21 and b22, Group 3 includes aggregation nodes b31 and b32, and Group 4 includes aggregation nodes b41 and b42). Aggregation nodes and access nodes that are in each group are fully connected. An aggregation node in each group is connected to an aggregation node in another group. Different from the data center network 100 shown in FIG. 2A, FIG. 6 includes two core nodes: a core 1 and a core 2. The aggregation node b11, the aggregation node b21, the aggregation node b31, and the aggregation node b41 are all connected to the core node core 1, and the aggregation node b12, the aggregation node b22, the aggregation node b32, and the aggregation node b42 are all connected to the core node core 2. In addition, in FIG. 6, the aggregation node b11 is connected to the aggregation node b21, the aggregation node b31, and the aggregation node b42, the aggregation node b12 is connected to the aggregation node b22, the aggregation node b32, and the aggregation node b41, the aggregation node b21 is further connected to the aggregation node b32 and the aggregation node b41, the aggregation node b22 is further connected to the aggregation node b31 and the aggregation node b42, the aggregation node b31 is further connected to the aggregation node b41, and the aggregation node b32 is further connected to the aggregation node b42. In the data center network 200 shown in FIG. 6, data may be transmitted between servers over a plurality of links. For example, a server s11 may send data traffic to a server s21 over four links, where the four links are respectively: a link L1 from the access node a11, the aggregation node b11, the aggregation node b21, and the access node a21 to the server s21; a link L2 from the access node a11, the aggregation node b12, the aggregation node b22, and the access node a21 to the server s21; a link L3 from the access node a11, the aggregation node b11, the core node core 1, the aggregation node b21, and the access node a21 to the server s21; and a link L4 from the access node a11, the aggregation node b12, the core node core 2, the aggregation node b22, and the access node a21 to the server s21. When the link L1 or the link L2 is used, four nodes are needed for data exchange to send data from the server s11 to the server s21. When the link L3 or the link L4 is used, five nodes are needed for data exchange to send data from the server s11 to the server s21. After receiving the data traffic from the server s11, the access node a11 may transmit a data packet to the aggregation node b11 or the aggregation node b12. It is assumed that the access node a11 transmits the data traffic to the aggregation node b 12, the aggregation node b 12 may first determine, based on a bandwidth of a directly connected link between the access node a11 and the aggregation node b22 and an amount of data to be transmitted to the aggregation node b 11, a congestion degree of the directly connected link in a current or preset time period. If the congestion degree of the directly connected link is less than a preset threshold, the aggregation node b 12 may preferentially send the data packet to the aggregation node b22 over the directly connected link between the aggregation node b 12 and the aggregation node b22. If the congestion degree of the directly connected link is greater than or equal to the preset threshold, the aggregation node b 12 may divide the data traffic into two parts, send one part of the data traffic to the aggregation node b22 over the directly connected link, and forward the other part of the data traffic to the aggregation node b22 by using the core node core 2.

Based on the structure of the data center network 200 shown in FIG. 6, the four links may be provided for data exchange between the servers, and the two core nodes are disposed in the data center network 100 shown in FIG. 6. In the data center network 100 in the conventional technology, if four links are provided for data exchange between servers, four core nodes need to be disposed in the data center network 100. Therefore, in comparison with the conventional technology in which all data is forwarded by the core nodes, the data center network 100 shown in FIG. 6 may use a small quantity of core nodes, so that a quantity of communication links in the data center network 100 shown in FIG. 1A can be implemented, thereby reducing a quantity of devices in the data center network and reducing costs. In addition, based on the data center network shown in FIG. 6, when data exchange is performed between servers connected to different groups, and an amount of data exchanged is small (for example, less than a bandwidth of a directly connected link between aggregation nodes), data transmission may be performed over the directly connected link between the aggregation nodes. In comparison with a case in which the data center network shown in FIG. 1A requires five nodes to perform data transition, in this embodiment of this application, four nodes are used to perform data transition, so that data exchange between servers located in different groups can be implemented, thereby reducing a data transmission delay. It can be learned from the data center network 100 shown in FIG. 6 that, in comparison with the data center network 100 shown in FIG. 2A, the data center network 100 shown in FIG. 6 provides more data transmission links for the data exchange between the servers. Therefore, the data center network 100 shown in FIG. 6 may be accessed by more servers.

In the data center network shown in FIG. 2A and FIG. 6, to implement a data connection between a core node and an aggregation node in each group, a quantity of Ethernet ports included in the core node is greater than or equal to a quantity of groups in the data center network. When a scale of the data center network is larger, in other words, more servers are needed to access the data center network, the quantity of groups increases accordingly. However, a quantity of Ethernet ports in each core node is limited. When the quantity of Ethernet ports in the core node is less than the quantity of groups, aggregation nodes in some groups cannot be connected to the core node. In a scenario, it is assumed that an aggregation node that is not connected to the core node needs to be used for data exchange, and bandwidths of links connected to the aggregation node are all insufficient. Because the aggregation node cannot transmit data to a central node for data transition, the aggregation node needs to wait for a long time before transmitting the data to a next node. Consequently, a high data transmission delay is caused, and data transmission efficiency of the data center network is reduced. Based on this, based on the data center network shown in FIG. 2A or FIG. 6, the data center network may further include more central nodes, where the central nodes included in the data center network may be divided into a plurality of groups. One group may also be referred to as a core plane, and central nodes in each group are connected to each other. In this way, the groups in the data center network may all be connected to the core plane, to perform data forwarding through the core plane when the bandwidth of the directly connected link between the aggregation nodes is insufficient.

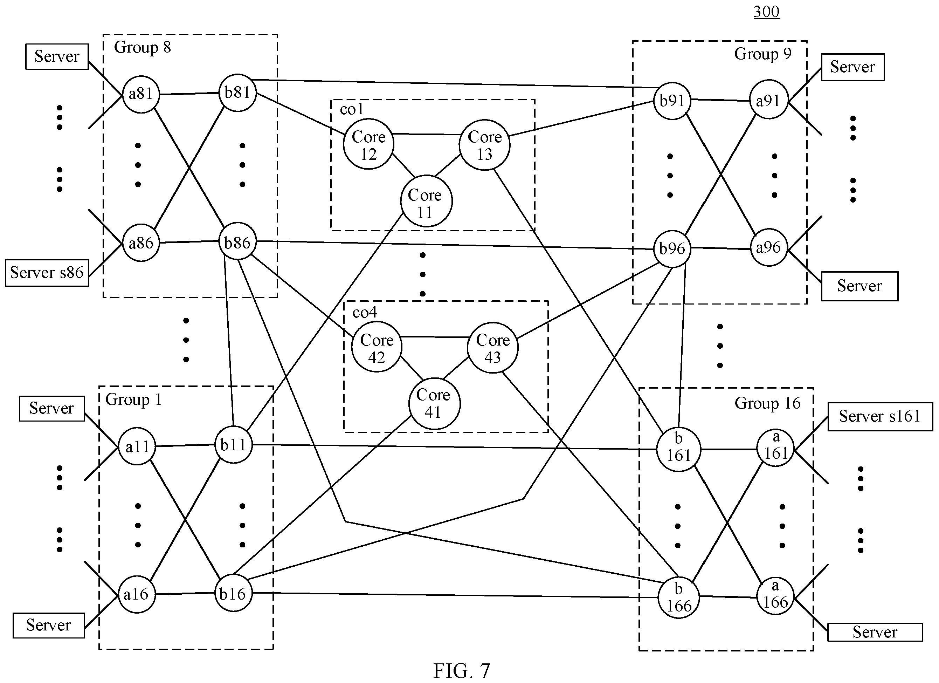

Still refer to FIG. 7. FIG. 7 is a schematic diagram of a structure of a data center network 300 according to an embodiment of this application. In FIG. 7, the data center network 300 includes a plurality of groups (for example, includes 16 groups, for example, FIG. 7 shows four groups: Group 1, Group 8, Group 9, and Group 16). Each group includes a plurality of nodes (for example, includes six access nodes, for example, FIG. 7 shows two access nodes in each group) and a plurality of aggregation nodes (for example, includes six aggregation nodes, for example, FIG. 7 shows two aggregation nodes in each group). Access nodes and aggregation nodes that are in each group are fully connected. In addition, FIG. 7 further includes a plurality of core planes (for example, includes four core planes, for example, FIG. 7 shows two core planes: co1 and co4). Each core plane includes three core nodes (where the core plane co1 includes a core 11 to a core 13, and the core plane co4 includes a core 41 to a core 43). Each group is connected to a core plane by using an aggregation node. Therefore, any server can perform data exchange with another server by using a core node. In FIG. 7, an aggregation node b11 in Group 1 is connected to the core node core 11 in the core plane co1, and an aggregation node b16 in Group1 is connected to the core node core 41 in the core plane co4. An aggregation node b81 in Group 8 is connected to the core node core 12 in the core plane co1. An aggregation node b86 in Group 8 is connected to the core node core 42 in the core plane co4. An aggregation node b91 in Group 9 is connected to the core node core 13 in the core plane co1, and an aggregation node b96 in Group 9 is connected to the core node core 43 in the core plane co4. An aggregation node b161 in Group 16 is connected to the core node core 13 in the core plane co1. An aggregation node b166 in Group 16 is connected to the core node core 43 in the core plane co4. In addition, the aggregation node b11 is further connected to the aggregation node b86 and the aggregation node b161. The aggregation node b16 is further connected to the aggregation node b96 and the aggregation node b166. The aggregation node b81 is further connected to the aggregation node b91. The aggregation node b86 is further connected to the aggregation node b96 and the aggregation node b166. The aggregation node b96 is further connected to the aggregation node b161.

In the structure of the data center network 300 shown in FIG. 7, data exchange may be performed between servers over more data transmission links. An example in which a server s86 transmits data to a server s161 is used. Because each group is connected to any core plane, after the server s86 sends data traffic to an access node a86, the access node a86 may forward the data traffic to any aggregation node in Group 8, and send the data traffic to any aggregation node in Group 16 by using the any aggregation node in Group 8. In a specific implementation, after receiving the data traffic from the server s86, the access node a86 selects a link from the access node a86 to the server s161 based on a destination server indicated in a data packet and a principle in which a quantity of nodes disposed on a link is the smallest and a congestion degree of the link used for transmitting the data traffic is less than a preset threshold. It can be learned from the data center network 300 shown in FIG. 7 that a quantity of nodes disposed on a link L86 that is from the access node a86, the aggregation node b86, the aggregation node b166, and an access node a161 to the server s161 is the smallest. Therefore, the access node a86 may transmit the data traffic to the aggregation node b86. After receiving the data traffic, the aggregation node b86 may determine a link from the aggregation node b86 to the server s161. It is assumed that a congestion degree of a link L861 from the aggregation node b86 to the aggregation node b166 is greater than or equal to the preset threshold, the aggregation node b86 divides a plurality of data packets in the data traffic into two parts, transmits one part of the data packets to the aggregation node b166 over the link L861 directly connected to the aggregation node b166, and transmits the other part of the data packets to the core node core 42 over a link L862. The core node core 42 sends the other part of the data packets to the core node core 43, and then, the core node core 43 sends the other part of the data packets to the aggregation node b166. Finally, the aggregation node b166 sends the received data packets to the access node a161, and the access node a161 transmits the data packets to the server s161. Further, when the congestion degree of the link L861 and a congestion degree of the link L862 both are greater than or equal to the preset threshold, the access node a86 may further transmit a part of data packets to the aggregation node b81, and transmit the part of data packets to the aggregation node b161 by using the core node core 12 and the core node core 13. The aggregation node b161 sends the received data packets to the access node a161, and the access node a161 transmits the data packets to the server s161.

The structure of the data center network 300 shown in FIG. 7 is usually used in a scenario in which a large quantity of servers are connected to a data center network. In this scenario, a quantity of ports included in a core node is generally less than a quantity of groups. It can be learned from FIG. 7 that each core plane may provide g=n*(c-(n-1)*m) ports by using the data center network 300, where n is a quantity of core nodes included in one core plane, c is a quantity of ports included in the core node, and m is a quantity of links between every two core nodes in a same core plane. In this way, at most g groups may be disposed in the data center network 300 shown in FIG. 7. It is assumed that one core plane includes three core nodes, each core node includes 128 ports, and every two core nodes are connected over eight links (in other words, each core node is connected to the other two core nodes by using 16 ports). In this way, one core plane can provide 336 ports. However, in the conventional technology shown in FIG. 1A, it is assumed that each core node includes 128 ports. In this case, the data center network shown in FIG. 1A may be accessed by only 128 groups, which is far less than a quantity of groups accessing the data center network shown in FIG. 7. In addition, in the conventional technology, when the quantity of ports included in the core node is less than the quantity of groups, the data center network shown in FIG. 1B is usually used, in other words, a layer of nodes are additionally added between access nodes and aggregation nodes that are in each group. Consequently, more node devices need to be disposed in the data center network, and costs of the data center network are increased. After the layer of nodes are additionally disposed between the access nodes and the aggregation nodes, seven nodes are disposed on a link for data transmission between every two servers, resulting in a severe data transmission delay. In conclusion, in the data center network 300 shown in FIG. 7, fewer node devices may be used for accessing more destination servers, and a small quantity of nodes (for example, four, five, or six nodes shown in FIG. 7) may be disposed on a data transmission link between every two servers. In this way, in the structure of the data center network provided in this embodiment of this application, the data transmission delay can be further reduced while the costs of the data center network are reduced.

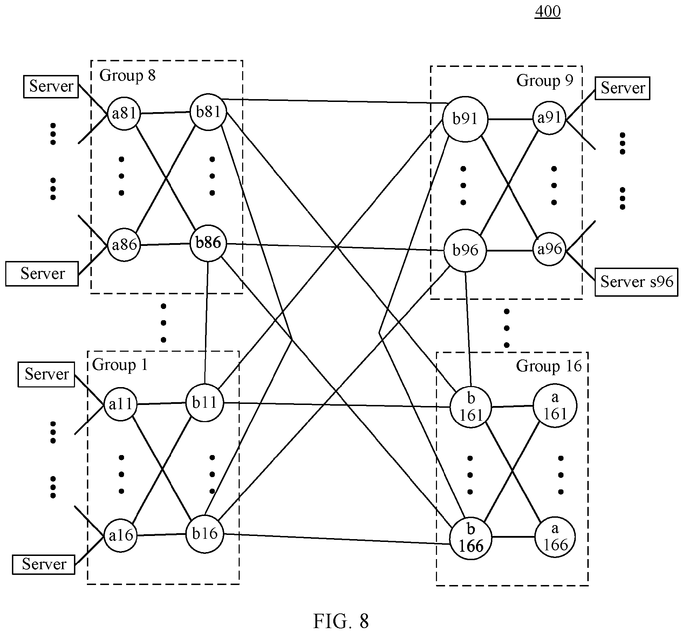

In the data center networks shown in FIG. 2A to FIG. 7, the central node is disposed. When a bandwidth between every two aggregation nodes is less than an amount of transmitted data, data forwarding may be performed by using the central node. In a possible implementation of this embodiment of this application, when the scale of the data center network further increases, a group in the data center network may be configured as a central node, and no additional central node is disposed in the data center network. In this scenario, the remaining groups are all connected, by using the aggregation node, to the group used for data forwarding. FIG. 8 is a schematic diagram of a structure of another data center network 400 according to an embodiment of this application. The data center network 400 and the data center network 300 shown in FIG. 8 includes a plurality of groups (for example, includes 16 groups, for example, FIG. 8 shows four groups: Group 1, Group 8, Group 9, and Group 16). Each group includes a plurality of nodes (for example, includes six access nodes, for example, FIG. 7 shows two access nodes in each group) and a plurality of aggregation nodes (for example, includes six aggregation nodes, for example, FIG. 7 shows two aggregation nodes in each group). Access nodes and aggregation nodes that are in each group are fully connected. In the data center network 400 shown in FIG. 8, an aggregation node b 11 in Group 1 is connected to an aggregation node b86, an aggregation node b91, and an aggregation node b161, and an aggregation node b16 in Group 1 is connected to an aggregation node b81, an aggregation node b96, and an aggregation node b166. The aggregation node b81 in Group 8 is further connected to the aggregation node b91 and the aggregation node b161, and the aggregation node b86 in Group 8 is further connected to the aggregation node b96 and the aggregation node b166. The aggregation node b91 in Group 9 is further connected to the aggregation node b166, and the aggregation node b96 in Group 9 is further connected to the aggregation node b161, to implement data exchange between servers accessing the data center network. Further, to improve data transmission efficiency, an access node in Group 16 is no longer connected to a server. For example, in a scenario, it is assumed that the aggregation node b96 in Group 9 needs to transmit a data packet to the aggregation node b16 in Group 1, and it is assumed that a bandwidth utilization of a directly connected link between the aggregation node b96 and the aggregation node b16 is greater than a preset threshold, the aggregation node b96 needs to perform data transition by using the aggregation node b161. If the server accesses Group 16, and it is assumed that the server in Group 16 also needs the aggregation node b161 to transmit data to the aggregation node b11, a conflict occurs between the data transmitted by the aggregation node b96 and the data transmitted by the server in Group 16. Therefore, Group 16 used for data transition does not access the server, so that a communication link preemption problem during data transmission can be avoided, thereby improving data transmission efficiency. It can be learned from the data center network 400 shown in FIG. 8 that, in comparison with the conventional data center network shown in FIG. 1, the data center network shown in FIG. 8 may provide a larger networking scale. In the data center network 400 shown in FIG. 8, a signal transmission method between the servers is similar to the data transmission method in the data center networks shown in FIG. 2A to FIG. 7. For details, refer to related descriptions of the data transmission method in the data center networks shown in FIG. 2A to FIG. 7. Details are not described again.

Based on a same inventive concept, an embodiment of this application provides a data transmission method 900. The data transmission method 900 may be applied to the data center network described in any one of FIG. 2A, FIG. 6 to FIG. 8. The data transmission method 900 includes the following steps.

Step 901: A first node receives a first data packet from a first server.

Step 902: The first node sends data to at least one of a plurality of second nodes over at least one of a first link and a second link when a destination address indicated in the first data packet is a second server. The first link is a directly connected link between a first group and a second group, and the second link is a link that is between the first group and the second group and that is transited via the third node.

In a possible implementation, that the first node sends data to the second node over at least one of a first link and a second link includes: when a congestion degree of the first link is lower than a congestion degree of the second link, sending first data traffic to a fourth node in the plurality of second nodes over the first link; when a congestion degree of the first link is greater than a congestion degree of the second link, sending the first data traffic to a fourth node in the plurality of second nodes over the second link; and when a congestion degree of the first link and a congestion degree of the second link both are greater than a first preset threshold, dividing the first data traffic into second data traffic and third data traffic, transmitting the second data traffic to a fourth node over the first link, and transmitting the third data traffic to a fifth node in the second node over the second link. The congestion degree of the first link is determined based on a bandwidth of the first link and data traffic on the first link in a preset time period.

In a possible implementation, the data center network further includes a third group, used for accessing a third server. The third group includes a sixth node. That the first node sends data to the plurality of second nodes over at least one of a first link and a second link includes: when the congestion degree of the first link is greater than or equal to the first preset threshold and the congestion degree of the second link is greater than or equal to a second preset threshold, dividing the first data traffic into fourth data traffic, fifth data traffic, and sixth data traffic, transmitting the fourth data traffic to the fourth node in the plurality of second nodes over the first link, transmitting the fifth data traffic to the fifth node in the plurality of second nodes over the second link, and transmitting the sixth data traffic to the sixth node over a third link. The third link is a link that is between the first group and the second group and that is transited via the sixth node. The congestion degree of the second link is determined based on a bandwidth of the second link and data traffic on the second link.

In a possible implementation, the first group further includes a seventh node. The seventh node is configured to access a server, and the seventh node performs uplink communication with the plurality of first nodes over a plurality of uplinks. The method further includes: receiving the first data traffic from the first server, selecting, based on at least one of a plurality of links from the seventh node to the second server, a quantity of nodes disposed on each of the plurality of links, and a congestion degree of each link, a link from the plurality of links when the destination address indicated in the first data traffic is the second server, and sending the first data traffic to the first node over the selected link.

The foregoing mainly describes the solutions provided in embodiments of this application from a perspective of interaction between network elements. It may be understood that, to implement the foregoing functions, network elements, such as a first aggregation node, a second aggregation node, a first access node, and a second access node, include corresponding hardware structures and/or software modules for performing various functions. A person of ordinary skill in the art should easily be aware that, in combination with the examples described in embodiments disclosed in this specification, network elements, algorithms and steps may be implemented by hardware or a combination of hardware and computer software. Whether a function is performed by hardware or hardware driven by computer software depends on particular applications and design constraint conditions that are of the technical solutions. A person skilled in the art may use different methods to implement the described functions for each particular application, but it should not be considered that the implementation goes beyond the scope of this application.

In embodiments of this application, the first aggregation node, the second aggregation node, the first access node, and the second access node may be divided into functional modules according to the foregoing method examples. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, division into modules is an example, and is merely a logical function division. In an actual implementation, there may be another division manner.

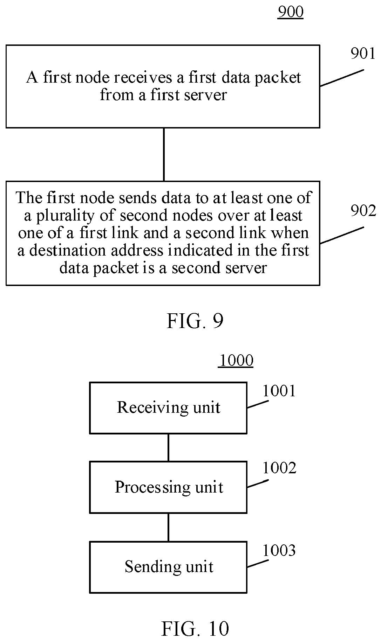

When each function module is obtained through division based on each corresponding function, FIG. 10 is a possible schematic diagram of a structure of a node in the foregoing embodiments. The node may be any one of an aggregation node, an access node, or a core node. The node includes a receiving unit 1001, a processing unit 1002, and a sending unit 1003. When the node is a first access node configured to access a source server, the receiving unit 1001 is configured to support the node in receiving a data packet sent by the source server. When the node is a first aggregation node, the receiving unit 1001 is configured to support the node in receiving a data packet sent by a first access node. When the node is a second aggregation node, the receiving unit 1001 is configured to support the node in receiving a data packet sent by at least one of a first aggregation node or a core node. When the node is a second access node configured to access a destination server, the receiving unit 1001 is configured to support the node in receiving a data packet sent by a second aggregation node. When the node is a first access node, the processing unit 1002 is configured to support the node in performing step 402 in FIG. 4. When the node is a first aggregation node, the processing unit 1002 is configured to support the node in parsing a data packet to obtain indication information. A link is selected from a plurality of links based on the indication information, and the data packet is sent to a second aggregation node over the selected link. When the node is a first access node, the sending unit 1003 is configured to support the node in sending a data packet to a first aggregation node. When the node is a first aggregation node, the sending unit 1003 is configured to support the node in sending a data packet to a second aggregation node or a core node. When the node is a core node, the sending unit 1003 is configured to support the node in sending a data packet to a second aggregation node. When the node is a second aggregation node, the sending unit 1003 is configured to support the node in sending a data packet to a second access node.

For example, the processing unit 1002 may be a processor, the receiving unit 1001 may be a receiver, the sending unit 1003 may be a transmitter, and the receiver and the transmitter may form an Ethernet interface. In addition, the node may further include a memory. The processor may invoke all or a part of computer programs stored in the memory, to control and manage actions of the node. For example, the processor may be configured to support the node in performing steps performed by the units shown in FIG. 10. The memory may be configured to support the node in executing and storing program code, data, and the like. The memory includes but is not limited to at least a part of storage space, a cache (Cache), or a register of the memory. At least one processor may implement or execute a plurality of example logical modules described with reference to content disclosed in this application, and may be one or more combinations of microprocessors that implement a computing function. In addition, the at least one processor may further include another programmable logic device, a transistor logic device, a discrete hardware component, or the like.

An embodiment further provides a computer-readable storage medium. The computer-readable storage medium stores computer instructions. When the computer instructions are run on a computer, the computer is enabled to perform the foregoing related method steps, to implement the method used for securely accessing software in the foregoing embodiments.

An embodiment further provides a computer program product. When the computer program product runs on a computer, the computer is enabled to perform the foregoing related steps, to implement the method used for securely accessing software in the foregoing embodiments.

The computer-readable storage medium or the computer program product provided in embodiments of this application is configured to perform a corresponding method provided above. Therefore, for beneficial effects that may be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions may be allocated to different functional modules for implementation based on a requirement, that is, an inner structure of an apparatus is divided into different functional modules to implement all or some of the functions described above.

In addition, functional units in embodiments of this application may be integrated into one product, each of the units may exist alone physically, or two or more units may be integrated into one product. For FIG. 9, when the foregoing modules are implemented in a form of a software functional unit and sold or used as an independent product, the modules may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor), to perform all or some of the steps of the method in embodiments of this application. The foregoing readable storage medium includes: any medium that can store program code, such as a USB flash drive, a removable hard disk drive, a read-only memory (read-only memory, ROM), a random access memory (random access memory, RAM), a magnetic disk, or an optical disc.

Finally, it should be noted that, the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some or all technical features thereof. However, these modifications or replacements do not cause the essence of corresponding technical solutions to depart from the scope of the technical solutions of embodiments of this application.

## Claims

1. A data center network, comprising:
a first group, used for accessing a first server, wherein the first group comprises a first node;
a second group, used for accessing a second server, wherein the second group comprises a plurality of second nodes; and
a third node disposed outside the first group and the second group, wherein the third node does not access a server, and
the first node sends, based on first data traffic sent by the first server, the first data traffic to at least one of the plurality of second nodes over at least one of a first link and a second link when a destination address indicated in the first data traffic is the second server, wherein the first link is a directly connected link between the first group and the second group, and the second link is a link that is between the first group and the second group and that is transited via the third node.

2. The data center network according to claim 1, wherein the first node is either of an access node and an aggregation node, the second node is either of an access node and an aggregation node, and the third node is a core node.

3. The data center network according to claim 1 or 2, wherein the first node is specifically configured to:
when a congestion degree of the first link is lower than a congestion degree of the second link, send the first data traffic to a fourth node in the plurality of second nodes over the first link;
when a congestion degree of the first link is higher than a congestion degree of the second link, send the first data traffic to a fourth node in the plurality of second nodes over the second link; or
when a congestion degree of the first link and a congestion degree of the second link both are greater than a first preset threshold, divide the first data traffic into second data traffic and third data traffic, transmit the second data traffic to a fourth node over the first link, and transmit the third data traffic to a fifth node in the second nodes over the second link, wherein
the congestion degree of the first link is determined based on a bandwidth of the first link and data traffic on the first link in a preset time period, and the congestion degree of the second link is determined based on a bandwidth of the second link and data traffic on the second link.

4. The data center network according to any one of claims 1 to 3, wherein the data center network further comprises a third group, used for accessing a third server, wherein the third group comprises a sixth node; and the first node is further configured to:
when the congestion degree of the first link is greater than or equal to the first preset threshold and the congestion degree of the second link is greater than or equal to a second preset threshold, divide the first data traffic into fourth data traffic, fifth data traffic, and sixth data traffic, transmit the fourth data traffic to the fourth node in the plurality of second nodes over the first link, transmit the fifth data traffic to the fifth node in the plurality of second nodes over the second link, and transmit the sixth data traffic to the sixth node over a third link, wherein
the third link is a link that is between the first group and the second group and that is transited via the sixth node.

5. The data center network according to any one of claims 1 to 4, wherein the first group comprises a plurality of first nodes, and the data center network comprises a plurality of third nodes;
the plurality of first nodes are correspondingly connected to the plurality of third nodes over a plurality of links; and
the plurality of second nodes are correspondingly connected to the plurality of third nodes over a plurality of links.

6. The data center network according to claim 5, wherein the plurality of third nodes form a plurality of groups, and third nodes in each group are connected to each other over a plurality of links.

7. The data center network according to claim 5 or 6, wherein the first group further comprises a seventh node, the seventh node is configured to access a server, and the seventh node performs uplink communication with the plurality of first nodes over a plurality of uplinks; and the seventh node is configured to:
receive the first data traffic from the first server, select, based on at least one of a plurality of links from the seventh node to the second server, a quantity of nodes disposed on each of the plurality of links, and a congestion degree of each link, a link from the plurality of links when the destination address indicated in the first data traffic is the second server, and send the first data traffic to the first node over the selected link.

8. A data transmission method applied to a data center network, wherein the data center network comprises a first group, a second group, and a third node disposed outside the first group and the second group, the first group is used for accessing a first server, the first group comprises a first node, the second group is used for accessing a second server, the second group comprises a plurality of second nodes, the third group does not access a server, and the method comprises:
sending, by the first node based on first data traffic sent by the first server, data to at least one of the plurality of second nodes over at least one of a first link and a second link when a destination address indicated in the first data traffic is the second server, wherein the first link is a directly connected link between the first group and the second group, and the second link is a link that is between the first group and the second group and that is transited via the third node.

9. The method according to claim 8, wherein the sending, by the first node, data to the second nodes over at least one of a first link and a second link comprises:
when a congestion degree of the first link is lower than a congestion degree of the second link, sending the first data traffic to a fourth node in the plurality of second nodes over the first link;
when a congestion degree of the first link is higher than a congestion degree of the second link, sending the first data traffic to a fourth node in the plurality of second nodes over the second link; or
when a congestion degree of the first link and a congestion degree of the second link both are greater than a first preset threshold, dividing the first data traffic into second data traffic and third data traffic, transmitting the second data traffic to a fourth node over the first link, and transmitting the third data traffic to a fifth node in the second nodes over the second link, wherein
the congestion degree of the first link is determined based on a bandwidth of the first link and data traffic on the first link in a preset time period.

10. The method according to claim 8 or 9, wherein the data center network further comprises a third group, used for accessing a third server, wherein the third group comprises a sixth node; and the sending, by the first node, data to the plurality of second nodes over at least one of a first link and a second link comprises:
when the congestion degree of the first link is greater than or equal to the first preset threshold and the congestion degree of the second link is greater than or equal to a second preset threshold, dividing the first data traffic into fourth data traffic, fifth data traffic, and sixth data traffic, transmitting the fourth data traffic to the fourth node in the plurality of second nodes over the first link, transmitting the fifth data traffic to the fifth node in the plurality of second nodes over the second link, and transmitting the sixth data traffic to the sixth node over a third link, wherein
the third link is a link that is between the first group and the second group and that is transited via the sixth node, and the congestion degree of the second link is determined based on a bandwidth of the second link and data traffic on the second link in a preset time period.

11. The method according to any one of claims 8 to 10, wherein the first group further comprises a seventh node, the seventh node is configured to access a server, and the seventh node performs uplink communication with a plurality of first nodes over a plurality of uplinks; and the method further comprises:
receiving the first data traffic from the first server, selecting, based on at least one of a plurality of links from the seventh node to the second server, a quantity of nodes disposed on each of the plurality of links, and a congestion degree of each link, a link from the plurality of links when the destination address indicated in the first data traffic is the second server, and sending the first data traffic to the first node over the selected link.

12. A readable storage medium, wherein the readable storage medium stores instructions; and when the readable storage medium is run on a device, the device is enabled to perform the steps of any node in the data communication method according to any one of claims 8 to 11.
